# EUROPEAN PATENT APPLICATION

(11) **EP 0 869 633 A2**
(43) Date of publication of application: **07.10.1998**
(21) Application number: 98105965.2
(22) Date of filing: 01.04.1998
(51) Int. Cl.: H04J 14/00, H04B 10/24

(54) **Communication system capable of transmitting a plurality of signals from a station to each subscriber through an optical transmission path**

(30) Priority: 02.04.1997 JP 83988/97
(71) Applicant: NEC CORPORATION, Tokyo (JP)
(72) Inventor: Shibutani, Makoto, Minato-ku, Tokyo (JP)
(74) Representative: VOSSIUS & PARTNER

(57) **Abstract**

In a communication system for carrying out bi-directional communication between a station device and a plurality of subscriber devices through an optical transmission path by the use of a time compression multiplexing technique, the station device multiplexes a downward transmission signal and at least one downward additional signal into a downward multiplexed signal and sends the downward multiplexed signal into a downward optical signal through the optical transmission path. The downward multiplexed signal is located within a predetermined time interval determined by the time compression multiplexing technique and is demultiplexed into the downward transmission signal and the at least one downward additional signal by a demultiplexer placed at each of the subscriber devices. With this structure, a video signal or the like can be also transmitted in the time compression multiplexing system together with the transmission signal from the station device to the plurality of the subscriber devices. This makes it possible to respond to multimedia requirements.

## Description

This invention relates to a communication system which performs bi-directional communication between a station unit and a plurality of subscriber units through an optical transmission path and which will be called an optical communication system because the optical transmission path is used for the bi-directional communication.

As a conventional optical communication system of the type described, a proposal has been offered about a passive double star (PDS) system which has a station unit or device and a plurality of subscriber units or devices optically coupled to the station unit through a star coupler included in an optical transmission path. With this system, the star coupler serves to optically couple the station unit to the subscriber units and to branch the optical transmission path into the plurality of the subscriber units. In such a conventional optical communication system, a time compression multiplexing (TCM) technique is often used to perform bi-directional communication between the station unit and the plurality of the subscriber units through the optical transmission path which includes the star coupler. In the optical communication system which uses the TCM technique and which may be referred to as a TCM optical communication system, the bi-directional communication is carried out by alternately transmitting a TCM signal within a burst period of, for example, 1 millisecond from the station unit and each of the subscriber units. Specifically, the station unit sends the plurality of the subscriber units the TCM signal which may be called a downward TCM and which is arranged within a front half of the burst period while the plurality of the subscriber units send the station unit the TCM signal which may be named an upward TCM signal and which is arranged within a rear half of the burst period. At any rate, such a PDS system is suitable for low speed transmission by using a light beam which has a wave length band of 1.3 micron meters .

It is to noted that each of the downward TCM signal and the upward TCM signal is transmitted in the form of an optical signal from the station unit and each of the subscriber units and that the upward TCM signal includes a plurality of subscriber TCM signals sent from the plurality of the subscriber units in a time division fashion.

Herein, the station unit may be located, for example, at a server or a service provider while each subscriber unit may be located, for example, at each customer. In this event, it should be considered that a great amount of data signals is transferred from the station unit in comparison with that of each subscriber unit in order to respond to a wide variety of requirements issued from the subscribers.

A conventional low speed PDS system which uses the TCM technique have been proposed by Harikae et al. in the article entitled "Optical Access System for Narrowband Communication and Video Distribution" (NTT R&D. Vol. 44, No. 12, PP. 1163-1170, 1995).

In the proposed system, a transmission rate of 28.8Mbps is determined along with a total transmission capacity of 192B in each of downstream and upstream directions, where B is representative of a bit rate of the B-channel defined by the narrow band ISDN (Integrated Services Digital Network) protocol and is equal to 64kbps. In this event, a guard time interposed between the downward and the upward TCM signals and an overhead time are left to avoid interference between the downward and the upward TCM signals and to control an access operation, respectively.

Under the circumstances, let the subscribers be equal to sixteen in number. In this case, each subscriber is assigned with an average transmission capacity of 12 B which is equal to 768 kbps.

Taking the above into consideration, conventional thoughts are that the transmission capacity assigned to each subscriber should fall within or be restricted to 12 B (768kbps) even when the downward TCM signal is transferred from the station unit or the service provider to each subscriber unit or customer. Such conventional thoughts make it difficult to match such a PDS system with multi-media communication for transmitting various kinds of data signals. For example, it is assumed that a video on demand service is required by a customer to receive a moving picture from a service provider. In order to transmit such a moving picture, a great deal of information should be sent from the service provider to the customer and exceeds the transmission capacity assigned to a downward link of the optical transmission path.

It is therefore an object of this invention to provide a communication system which is capable of flexibly coping with multi-media service requirements.

It is another object of this invention to provide a communication system of the type described, which can greatly increase only a transmission capacity in a downward link from a station unit to each of subscriber units.

It is still another object of this invention to provide a communication system of the type described, which is readily applicable to a conventional PDS system of a low speed.

A communication system to which this invention is applicable is for use in performing bi-directional communication between a station unit and a plurality of subscriber units through an optical transmission path. In this system, a time compression multiplexing (TCM) technique is used to transmit, within a predetermined burst period, a downward TCM signal from the station unit to the subscriber units and an upward TCM signal from each of the subscriber units to the station unit. According to this invention, the station unit comprises a signal generating circuit for generating said downward TCM signal, an additional signal generating circuit for generating an additional signal different from said TCM signal, a multiplexing circuit for multiplexing the downward TCM signal and the additional signal into a multiplexed signal, and an optical transmitter for supplying said multiplexed signal to the optical transmission path in the form of an optical signal. In addition, each of the subscriber units comprises an demultiplexing circuit for demultiplexing the multiplexed signal into the downward TCM signal and the additional signal, and an output circuit for producing the downward TCM signal and the additional signal as the output signals.

### Brief Description of the Drawing:

Fig. 1 is a block diagram of a conventional communication system for optical communication;
Fig. 2 is a time-chart for use in describing operation of the conventional communication system illustrated in Fig. 1;
Fig. 3 is a block diagram of a communication system according to a preferred embodiment of this invention;
Fig. 4 is a time-chart for use in describing operation of a station unit illustrated in Fig.3; and
Fig. 5 is a time-chart for use in describing operation of each subscriber unit illustrated in Fig.3.

### Description of the Preferred Embodiment:

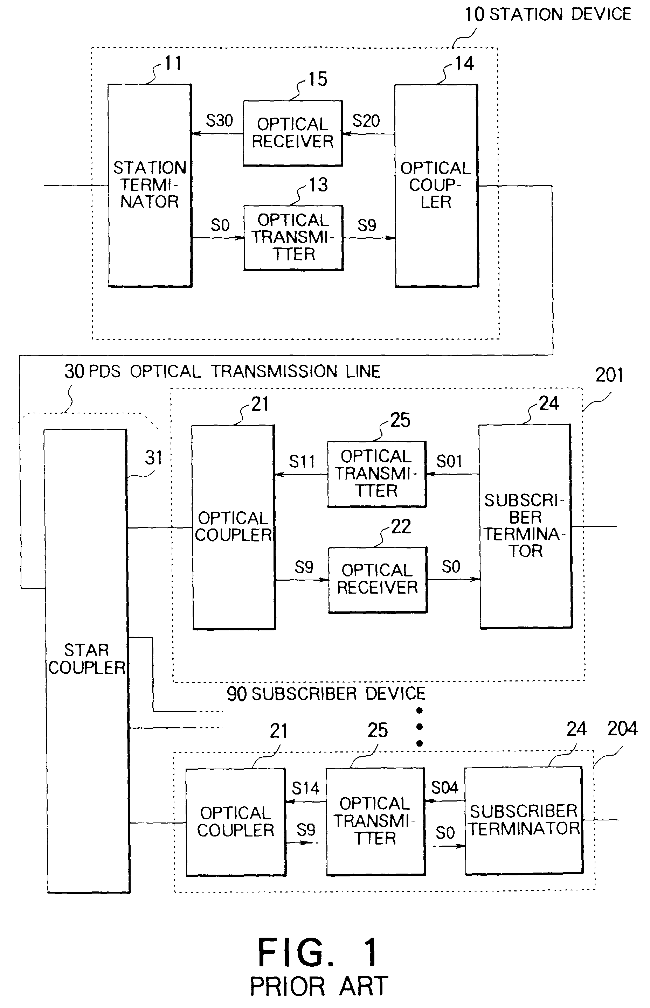

Referring to Fig. 1, description will be at first made about a conventional communication system which carries out optical communication by the use of a TCM technique and which may be also called a PDS (Passive Double Star) system. In this system shown in Fig. 1, four subscriber units or devices 201-204 are connected to a station unit or device 10 through a PDS optical transmission line 30.

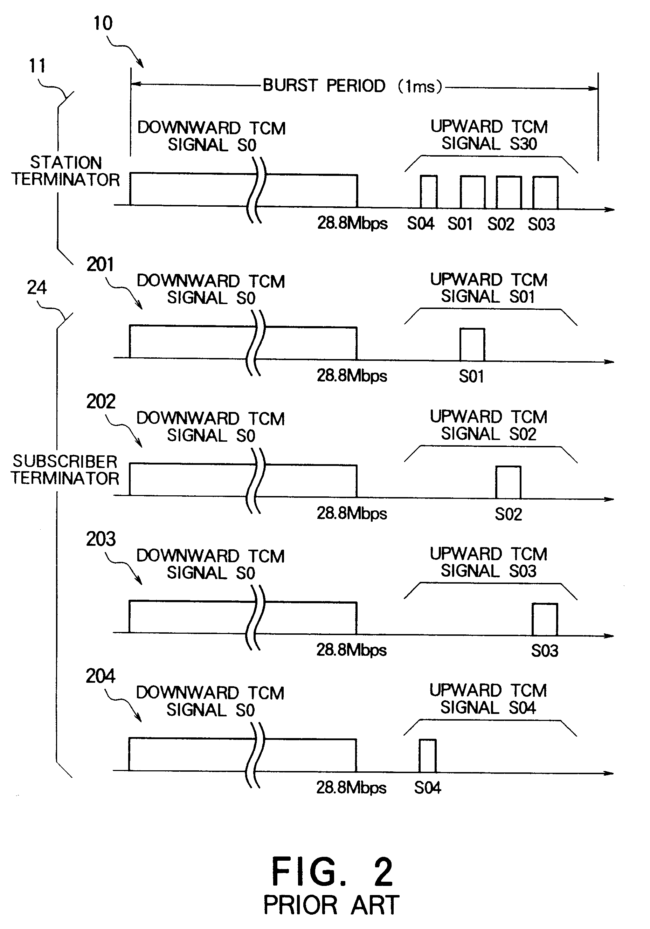

Hereunder, an operation of this conventional system will be described with reference to Figs. 1 and 2. In the station device 10, a station terminal interface or terminator 11 is coupled to an upper circuit (not shown) and produces a downward TCM signal S0 which is converted into an optical signal S9 by an optical transmitter 13. The optical signal S9 is sent to the PDS transmission line 30 through an optical coupler 14. The optical signal S9 is sent over the PDS transmission line 30 to a star coupler 31 which broadcasts the optical signal S9 to the subscriber units or devices 201-204.

Each of the subscriber devices 201-204 has an optical coupler 21 which is given the optical signal S9 distributed through the star coupler 31. The optical signal S9 is converted into the downward TCM signal S0 by an optical receiver 202 and sent to a subscriber terminator 24.

On the other hand, the subscriber devices 201-204 in Fig. 2 are supplied with upward TCM signals S01 - S04 each of which appears within a burst period (1ms in this case). Practically, a delay measurement signal is inserted in the upward TCM signal S0 and a guard time is left between the downward and the upward TCM signals within each burst period.

In the subscriber devices 201-204, the upward TCM signals S01 -S04 which are received from subscriber sides through the subscriber terminal interfaces or subscriber terminators 24. The upward TCM signals S01 to S04 are located during the burst period within predetermined time intervals which are illustrated as an upward TCM signal S30 in Fig. 2. At any rate, each upward TCM signal S01 to S04 is allocated with each predetermined time interval, as shown in Fig. 2 and is sent through an optical transmitter 25 to the PDS optical transmission line 30.

Specifically, each upward TCM signal S01 to S04 is converted to an optical signal S11 to S14 and is thereafter sent to each optical coupler 21. The optical signals S11 to S14 is supplied from the optical couplers 21 to the star coupler 31included in the PDS optical transmission line 30. In the star coupler 31, the optical signals S11 - S14 are assigned with the predetermined time intervals mentioned before to be sent to the station device 10. In the station unit 10, the optical signal is received through the optical coupler 14 as the optical signal light S20 which includes the optical signals S11 to S14 in the order illustrated in Fig. 2.

In the station device 10, the optical signal S20 which is received in the above-mentioned manner is sent to the optical receiver 15 which converts the optical signal S20 to an upward TCM signal S30 which is sent to the station line terminator 11. In this event, the upward TCM signal S30 carries the upward TCM signals S01 - S04 sent by the subscribers. Therefore, the upward TCM signals S01 to S04 can be received by the station device 10.

Conventional studies have been made in connection with the communication system described above on the premise that a data transmission capacity per subscriber supplied from the station device 10 to each of the subscriber devices 201 to 204 is restricted to 12B (768kbps). This makes it difficult to match the above-mentioned system with future multi-media communication. Especially, for the purpose of supplying various kinds of information of the multi-media service, including moving pictures based on VOD (Video On Demand) and the like, it might be required to greatly increase the transmission capacity of the downward links.

Subsequently, description will be made about embodiment of the present invention with reference to the drawing figures.

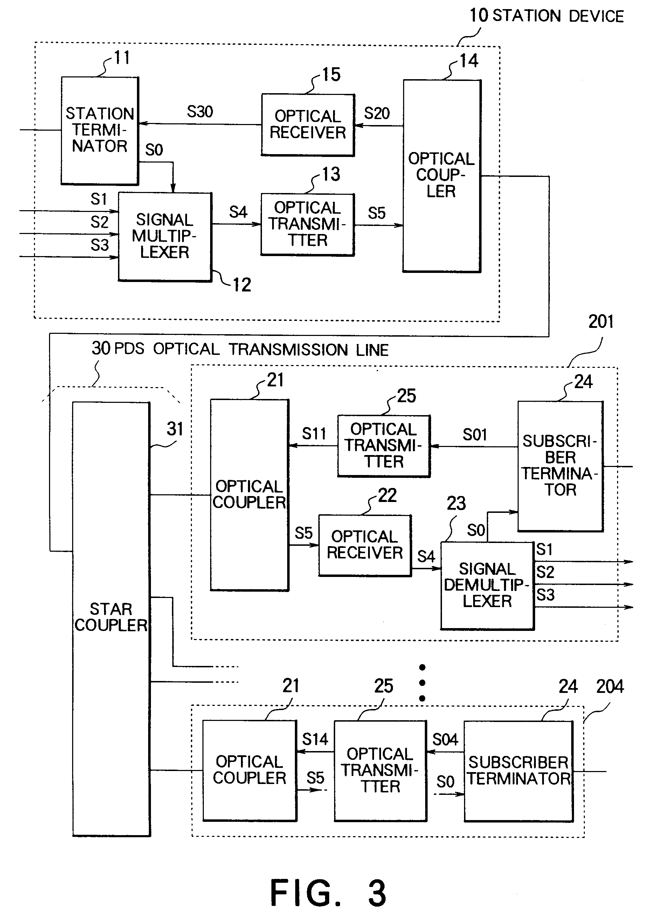

Referring to Fig. 3, a communication system according to a preferred embodiment of this invention comprises similar parts designated by like reference numerals. In this connection, the illustrated system includes the single station device or unit 10, first through fourth subscriber units or devices 201 to 204 like in Fig. 1, and the star coupler 31 which optically couples the station device 10 and the first through the fourth subscriber units 201 to 204 and which is included in the PDS optical transmission line 30.

Like in Fig. 1, the station device 10 comprises the station terminal interface or terminator 11, the optical transmitter 13, the optical coupler 14 and the optical receiver 15. Each of the subscriber devices 201 - 204 comprises the optical coupler 21, the optical receiver 22, the subscriber terminal interface or terminator 24 and the optical transmitter 25. In the PDS optical transmission line 30, the star coupler 31 is provided on each of the subscriber sides.

The communication system illustrated in Fig. 3 is different from those illustrated in Fig. 1 in that the former includes a signal multiplexer 12 in the station device 10 and a signal demultiplexer 23 in each of the subscriber devices 201 to 204.

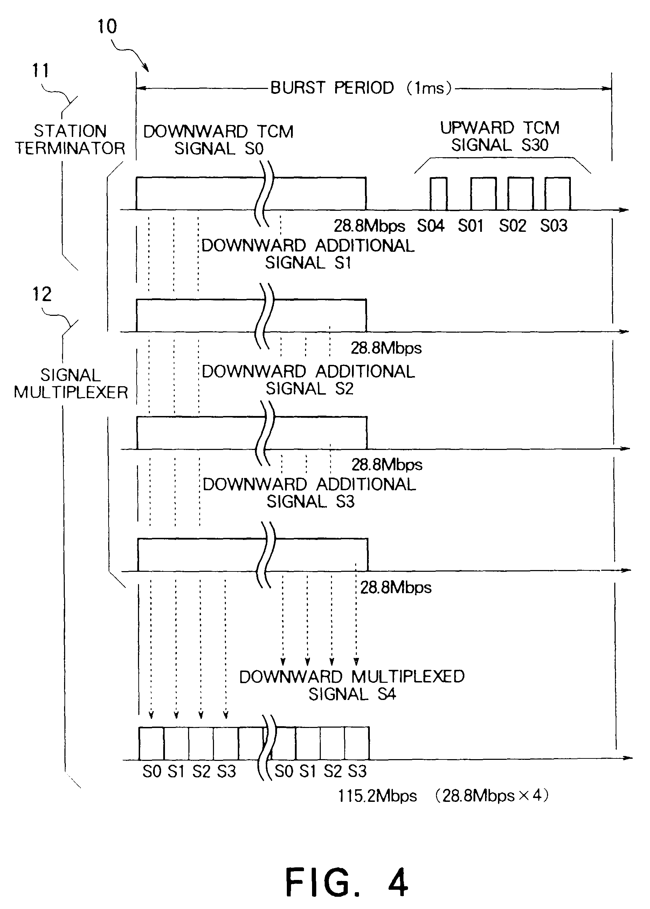

At first, referring to Figs. 3 and 4, description will be mainly made as regards the signal multiplexer 12 and the signal demultiplexer 23.

In the station device 10, the station terminal interface 11 is operable at the transmission rate of 28.8Mbps and sends data information in the form of the downward TCM signal S0 to the signal multiplexer 12. Such a sequence of data information will be called a downward stream. The signal multiplexer 12 produces a downward multiplexed signal S4 by multiplexing data bits of the downward TCM signal S0 and downward additional signals S1 - S3 which will be described later in detail and which are given simultaneously with the downward TCM signal S0. Accordingly, the downward multiplexed signal S4 has a transmission rate or speed of 115.2Mbps which is equal to four times the conventional transmission rate mentioned in conjunction with Fig. 1.

The optical transmitter 13 converts directly the downward multiplexed signal S4 into the downward optical signal S5 by carrying out intensity modulation and supplies the downward optical signal S5 to the optical coupler 14. The optical transmitter 13 may be, for example, a 1.3µm band DFB-LD (Distributed Feed-Back Laser Diode) which enables such high speed modulation.

The downward optical signal S5 is sent through the optical coupler 14 to the PDS optical transmission line 30 and thereafter delivered to each of the subscriber devices 201 to 204 through the star coupler 31. In each of the subscriber devices 201 to 204, the downward multiplexed signal S4 is demultiplexed into the downward TCM signal S0 and the downward additional signals S1 to S3 by the signal demultiplexer 23.

The illustrated station device 10 is supplied from the first through the fourth subscriber devices 201 to 204 with the upward stream , namely, an upward optical signal which is identical with that mentioned in conjunction with Fig. 1. Specifically, the optical coupler 14 is supplied with the upward optical signal S20 from the optical coupler 14 coupled to the PDS optical transmission line 30. The upward optical signal S20 has transmission signals included in the upward TCM signal S30 illustrated in Fig. 4. The optical receiver 15 converts the upward optical signal S20 into the upward TCM signal S30 to be sent to the station terminal interface 11. The upward TCM signal S30 includes the upward TCM signals S01 to S04 each of which has a length of 12B (12 x 64kbps) composed of transmission information and overhead information.

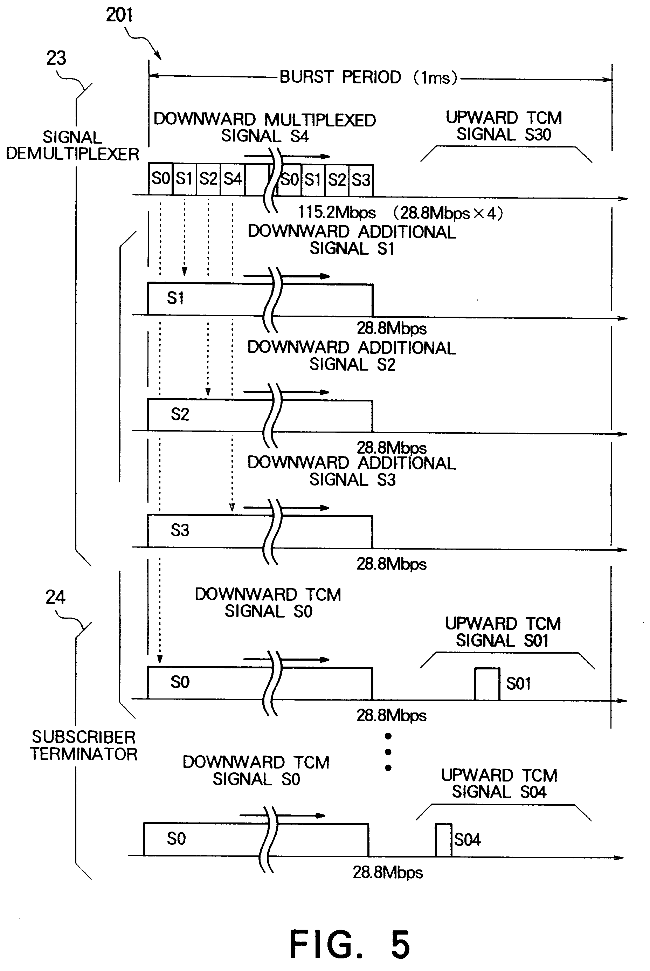

Referring to Fig. 3 and 5, description will be mainly made only about the subscriber device 201 because the other subscriber devices 202 to 204 are identical with the subscriber device 201 in structure and operation.

In the subscriber device 201, the optical coupler 21 is operable in the manner mentioned with reference to Fig. 1 to separate the downward optical signal S5 from the input optical signal given from the PDS transmission line 30. The downward optical signal S5 is delivered to the optical receiver 22 to be sent as the downward multiplexed signal S4 to the signal demultiplexer 23. In the illustrated example, the downward multiplexed signal S4 has the transmission rate of 115.2 Mbps.

The signal demultiplexer 23 performs bit separation operation to demultiplex the downward multiplexed signal S4 into the downward TCM signal S0 and the downward additional signals S1 - S3, each of which is produced at the transmission rate of 28.8Mbps. The downward TCM signal S0 is sent to the subscriber terminal interface or terminator 24 while the downward additional signals S1 - S3 are sent to each subscriber.

Supplied with the downward TCM signal S0 from the signal demultiplexer 23, the subscriber terminal interface or terminator 24 sends the downward TCM signal S0 to each subscriber within a downward time interval assigned to the downward TCM signal.

Herein, description will be directed to an operation of an upward direction from the subscriber device 201 to the station device 10. In this case, the subscriber terminal interface or terminator 24 is supplied from the subscriber with a subscriber signal and arranges the subscriber signal into an upward time interval assigned to the upward TCM signal S01. The upward TCM signal S01which is arranged within the upward time interval is sent to the optical transmitter 25. In the optical transmitter 25, optical modulation is performed to modulate an optical signal by the upward TCM signal S01 in intensity to produce a modulated signal as the upward optical signal S11. In the example illustrated in Fig. 3, the optical transmitter 25 is implemented by a Fabry-Perot semiconductor laser device , as mentioned above. The upward optical signal S11 is sent through the optical coupler 21 to the PDS optical transmission path 30 which includes the star coupler 31.

Herein, similar operations are performed in the other subscriber devices 202 to 204 to receive downward optical signal S5 and transmit the upward optical signal S11. However, it is needless to say that each of the upward TCM signals S01 to S04 has a content different from one another.

Each signal will be described more in detail with reference to Figs. 3, 4, and 5.

In Fig. 3, the station terminal interface or terminator 11 is operable in response to the input / output signals formed by the TCM technique. The station terminator 11 supplies the downward TCM signal S0 to the signal multipexer 12 within a front or the first half of the burst period of 1 millisecond while it receives the upward TCM signal S30 from the optical receiver 15 within a rear or the second half of the burst period. For this example, it is assumed that the downward TCM signal S30 has a bit rate of the signal equal to 28.8Mbps.

The illustrated downward TCM signal S0 includes a frame overhead signal, a control signal, an address information signal, and so on, together with the transmission data signal given at the transmission rate of 192B (B = 64kbps).

On the other hand, the upward TCM signal S30 includes the upward TCM signals S01 - S04 which are sent from each of the subscriber devices 201 - 204 to the station device 10. Each of the upward TCM signals S01 - S04 includes a frame overhead signal, a transmission data signal given at the transmission rate of 12B.

In the illustrated example, it is surmised that the upward TCM signal S04 from the subscriber device 204 to the station device 10 is used as a delay measurement signal which is indicative of a result of measuring a transmission delay time between the station device 10 and the subscriber side device 204. The station device 10 calculates an upward signal transmission timing of the subscriber device 204 with reference to the delay measurement signal and informs the subscriber device 204 of the result. By the information from the station device 10, the subscriber device 204 sends the upward TCM signal S04 at the timing indicated by the station device 10 within and after the next burst period.

In Fig. 3, each of the downward additional signals S1 - S3 Is sent to the signal multiplexer 12 and has the same transmission rate speed. In this event, the downward additional signals S1 to S3 are multiplexed along with the downward TCM signal into the downward multiplxed signal S4 which is arranged within the same burst period as the downward TCM signal S0. Accordingly, the downward multiplexed signal S4 is obtained by multiplexing the downward TCM signal S0 and the downward additional signals S1 - S3 and has the transmission rate of 115.2Mbps which is equal to four times of 28.8Mbps in each input signal.

The downward multiplexed signal S4 is demultiplexed by the demultiplexer 22 of each subscriber device 201 to 204 into the downward TCM signal S0 and the downward additional signals S1 - S3, each of which has the transmission rate of 28.8Mbps.

In the subscriber device 201, the downward TCM signal S0 is used for the bi-directional communication service in a telephone network, a narrow band ISDN, and the others. On the other hand, the downward additional signals S1 - S3 may be used for various services, such as a digital video broadcasting service, a high speed down loading service, and the like.

As described above, in the communication system according to this invention, the transmission capacity of a downward link is increased to four times of the transmission capacity of an upward link assigned to the conventional low speed PDS system. On the other hand, the input / output signal for the station or the subscriber terminator 11 or 24 may be identical with the input/output signal for the conventional low speed PDS system. Accordingly, each terminator in the station device 10 and the subscriber devices 201 to 204 may not be changed together with control software used to control each terminator in the conventional low speed PDS system.

Furthermore, as the downward TCM signal and the downward additional signal are mutually independent of one another, both the above-mentioned signals can use signal formats or transfer modes different from each other. For example, the downward TCM signal may be transmitted in the Synchronous Transfer Mode (STM) while the downward additional signals may be transmitted in the Asynchronous Transfer Mode (ATM).

The signals are multiplexed or demultiplexed by the use of bit multiplexing /demultiplexing technique. However, the other time division multiplexing technique, such as byte multiplexing / demultiplexing technique may be used. Further, a number of the downward additional signals may be optionally determined instead of three described above.

Although the simplification of composition for the communication device is attempted by the use of the low speed PDS system, the terminator may have any circuit configuration which can process a plurality of signals.

As described above, in the system according to the invention, the plurality of signals are multiplexed for the downward link of PDS system operable in accordance with the TCM technique. Accordingly, the downward signal transmission speed becomes higher. This is advantageous in that the transmission capacity greatly increases for the link from the station device to the subscriber device even when the TCM technique is used. Further, as most of the conventional components can be used as they are, each device may not be largely changed.

Furthermore, the system according to the invention can use the components of the conventional low speed PDS system and can multiplex signals which are independent of one another and which are sent through the downward link.

## Claims

1. A communication system for use in performing bi-directional communication between a station unit and a plurality of subscriber units through an optical transmission path by using a time compression multiplexing (TCM) technique to transmit, within a predetermined burst period, a downward TCM signal from the station unit to the subscriber units and an upward TCM signal from each of the subscriber units to the station unit, wherein the station unit comprises:
a signal generating circuit for generating said downward TCM signal;
an additional signal generating circuit for generating an additional signal different from said TCM signal; and
a multiplexing circuit for multiplexing the downward TCM signal and the additional signal into a multiplexed signal; and
an optical transmitter for supplying said multiplexed signal to the optical transmission path in the form of an optical signal.

2. A communication system as claimed in claim 1, wherein each of said subscriber units is supplied with the optical signal through the optical transmission path to produce a plurality of output signals and comprises:
an demultiplexing circuit for demultiplexing the multiplexed signal into the downward TCM signal and the additional signal; and
an output circuit for producing the downward TCM signal and the additional signal as the output signals.

3. A communication system as claimed in claim 1 or 2, wherein the optical transmission path includes a star coupler and forms a passive double star network.

4. A communication system for use in performing bi-directional communication between a station unit and a plurality of subscriber units through an optical transmission path by using a time compression multiplexing (TCM) technique to transmit, within a predetermined burst period, a downward TCM signal from the station unit to the subscriber units and an upward TCM signal from each of the subscriber units to the station unit,
said station unit comprising:
a signal generating circuit for generating said downward TCM signal;
an additional signal generating circuit for generating an additional signal different from said TCM signal; and
a multiplexing circuit for multiplexing the downward TCM signal and the additional signal into a multiplexed signal; and
an optical transmitter for supplying said multiplexed signal to the optical transmission path in the form of an optical signal;
each of said subscriber units comprising:
an demultiplexing circuit for demultiplexing the multiplexed signal into the downward TCM signal and the additional signal; and
an output circuit for producing the downward TCM signal and the additional signal as the output signals.

5. A communication system as claimed in claim 4, wherein said multiplexed signal is subjected to either one of bit time division multiplexing and byte time division multiplexing.

6. A communication system as claimed in claim 4 or 5, wherein the additional signal includes a plurality of subsidiary signals each of which is different from one another.

7. A communication system as claimed in any of claims 4 to 6, wherein the additional signal has a format different from that of the TCM signal.

8. A communication system as claimed in claim 7, wherein the additional signal is of asynchronous transfer mode while the TCM signal is of synchronous transfer mode.

9. A method of performing bi-directional communication between a station unit and a plurality of subscriber units through an optical transmission path by using a time compression multiplexing (TCM) technique to transmit, within a predetermined burst period, a downward TCM signal from the station unit to the subscriber units and an upward TCM signal from each of the subscriber units to the station unit, comprising the steps of:
generating an additional signal simultaneously with the downward TCM signal in the station unit;
multiplexing the additional signal and the downward TCM signal into a multiplexed signal in the station unit; and
transmitting the multiplexed signal as an optical signal from the station unit to the subscriber units through the optical transmission path.

10. A method as claimed in claim 9, further comprising the steps of:
receiving the optical signal in each of the subscriber units to obtain the multiplexed signal;
demultiplexing the multiplexed signal into the downward TCM signal and the additional signal in each of the subscriber units.
